(19) Europäisches Patentamt
European Patent Office
Office européen des brevets

(11) **EP 4 026 996 B1**

(12) **EUROPÄISCHE PATENTSCHRIFT**

(45) Veröffentlichungstag und Bekanntmachung des Hinweises auf die Patenterteilung:
**26.07.2023  Patentblatt 2023/30**

(21) Anmeldenummer: **21212815.1**

(22) Anmeldetag: **07.12.2021**

(51) Internationale Patentklassifikation (IPC):
**F02B 43/10** (2006.01)  **F02M 21/02** (2006.01)
**F02M 23/00** (2006.01)

(52) Gemeinsame Patentklassifikation (CPC):
**F02M 21/0206; F02B 43/10; F02M 21/0293;**
**F02M 23/00; F02M 25/00; F02M 26/20;**
F02M 2700/4326; Y02T 10/30

(54) **VERBRENNUNGSMOTOR UND VERFAHREN ZUM BETREIBEN EINES VERBRENNUNGSMOTORS**

COMBUSTION ENGINE AND METHOD FOR OPERATING SAME

MOTEUR À COMBUSTION INTERNE ET PROCÉDÉ DE FONCTIONNEMENT D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2021  AT 500042021**

(43) Veröffentlichungstag der Anmeldung:
**13.07.2022  Patentblatt 2022/28**

(73) Patentinhaber: **PGES GmbH**
**6200 Jenbach (AT)**

(72) Erfinder: **HERDIN, Rüdiger**
**2483 Ebreichsdorf (AT)**

(74) Vertreter: **Beer & Partner Patentanwälte KG**
**Lindengasse 8**
**1070 Wien (AT)**

(56) Entgegenhaltungen:
DE-A1-102019 106 722     JP-A- 2010 038 003
JP-A- 2016 118 109      KR-B1- 102 027 498

**Beschreibung**

Die Erfindung betrifft einen Verbrennungsmotor zum Verbrennen eines Wasserstoff und Luft enthaltenden Brennstoffgemisches in einem Otto-Kreisprozess, wobei der Verbrennungsmotor wenigstens eine Zylindereinheit und einen damit verbundenen Saugtrakt aufweist, wobei die Zylindereinheit einen Brennraum, wenigstens ein Einlassventil und wenigstens ein Auslassventil aufweist, und wobei der Saugtrakt wenigstens eine Gasmischeinheit zum Erzeugen des Brennstoffgemisches aufweist.

Weiters betrifft die Erfindung ein Verfahren zum Betreiben eines derartigen Verbrennungsmotors.

Verbrennungsmotoren, in denen ein Brenngas-Luft-Gemisch verbrannt wird, sind bekannt und werden im allgemeinen als Gasmotoren bezeichnet.

Diese Gasmotoren weisen einen Saugtrakt auf, der über ein Einlassventil mit einem Brennraum einer Zylindereinheit verbunden ist. Der Saugtrakt umfasst eine Gasmischeinheit, in der das Brenngases mit Luft vermischt wird, um das für den Betrieb des Gasmotors notwendige Brennstoffgemisch bereitzustellen. Weiters umfasst der Saugtrakt in der Regel einen Verdichter, einen Gemischkühler und eine Drosselklappe.

Beim Übergang vom Ausstoßtakt zum Ansaugtakt des Otto-Kreisprozesses gibt es eine zeitliche Überschneidung, in der ein Auslassventil des Brennraums noch nicht vollständig geschlossen, das Einlassventil jedoch bereits geöffnet ist. Während dieser sogenannten Ventilüberschneidung, in der sowohl das Auslassventil als auch das Einlassventil zumindest teilweise geöffnet sind, können heiße Verbrennungsrückstände, die sich noch im Brennraum befinden und noch nicht durch das Auslassventil ausgestoßen wurden, in den Saugtrakt, in dem sich zündfähiges Brennstoffgemisch befindet, eindringen.

Der Saugtrakt herkömmlicher Gasmotoren, in denen beispielsweise Erdgas als Brenngas verbrannt wird, muss nach der Gasmischeinheit eine ausreichende Leitungslänge (oder eine eigens dafür vorgesehene Vorrichtung) für eine gründliche Durchmischung von Brenngas und Luft vor dem Eintritt in den Brennraum aufweisen. Dadurch kann ein möglichst homogenes und mit einem hohen Wirkungsgrad verbrennbares Brenngas-Luft-Gemisch bereitgestellt werden. Da das Brenngas-Luft-Gemisch solcher Verbrennungsmotoren nicht besonders zündfreudig ist und im Brennraum auch erst nach dem Verdichtungstakt gezündet werden kann, besteht jedoch keine große Gefahr einer Rückzündung, d.h., dass heiße Verbrennungsrückstände, die während der Ventilüberschneidung in den Saugtrakt eindringen können, das Brennstoffgemisch bereits im Saugtrakt entzünden.

Bei Gasmotoren, die als Brenngas Wasserstoff verbrennen, weist das in der Gasmischeinheit erzeugte Brennstoffgemisch aus Wasserstoff und Luft allerdings sehr breite Zündgrenzen auf und ist auch schon im vorverdichteten Zustand äußerst zündfreudig. Daher besteht ein erhebliches Risiko einer Rückzündung, die zu schweren Schäden am Motor führen würde.

Bei bekannten Wasserstoff-Verbrennungsmotoren wird das Problem der Rückzündung gelöst, indem die Gasmischeinheit erst unmittelbar vor dem Einlassventil der Zylindereinheit im Saugtrakt angeordnet ist. Verdichteter Wasserstoff wird dabei über die Gasmischeinheit unmittelbar vor dem Einlassventil in die verdichtete Luft eingebracht, sodass der Abschnitt des Saugtraktes, in dem sich ein zündfreudiges Wasserstoff-Luft-Gemisch bilden kann, nur sehr kurz ist. In Kombination mit einer darauf abgestimmten Steuerung der Gasmischeinheit und des Einlassventils, die sicherstellt, dass sämtlicher Wasserstoff aus dem Saugtrakt in den Brennraum gespült ist, bevor das Einlassventil geschlossen wird, kann die Gefahr einer Rückzündung vermieden werden. Nachteilig an dieser - für herkömmliche Wasserstoff-Verbrennungsmotoren - notwendigen Form der Brenngaszufuhr ist jedoch, dass damit kein homogenes Wasserstoff-Luft-Gemisch im Brennraum bereitgestellt werden kann, da die für eine optimale Durchmischung des Brennstoffgemisches benötigte Mindestweglänge, die das Brennstoffgemisch zurücklegen muss, nicht erreicht wird.

Eine weitere mögliche Lösung für Wasserstoff-Verbrennungsmotoren würde darin liegen, den Wasserstoff direkt (ähnlich einem Direkteinspritzverfahren von Diesel) in den Brennraum einzubringen. Derartige Verbrennungsmotoren wären jedoch technisch sehr herausfordernd und das Brennstoffgemisch im Brennraum ist aufgrund der geringen bzw. nicht vorhandenen Mischlänge bei derartigen Wasserstoff-Verbrennungsmotoren ebenfalls relativ inhomogen.

Verbrennungsmotor bei dem die Gasmischung erst unmittelbar vor dem Einlassventil der Zylindereinheit über Gaseinspritzung in den Saugtrakt erfolgt, sind beispielsweise aus JP 2010-038003 A, KR 10-2027498 B1 und JP 2016-118109 A bekannt.

Der Erfindung liegt daher die Aufgabe zu Grunde, einen Verbrennungsmotor zum Verbrennen eines Brennstoffgemisches mit Wasserstoff und Luft in einem Otto-Kreisprozess der eingangs genannten Gattung sowie ein Verfahren zum Betreiben eines derartigen Verbrennungsmotors zur Verfügung zu stellen, der/das die angesprochenen Probleme so weit wie möglich vermeidet. Insbesondere soll ein Verbrennungsmotor bzw. ein Verfahren zum Betreiben eines solchen bereitgestellt werden, mit bzw. bei dem ohne Gefahr einer Rückzündung ein homogenes Wasserstoff-Luft-Gemisch verbrannt werden kann.

Gelöst wird diese Aufgabe erfindungsgemäß mit einem Verbrennungsmotor, der die Merkmale von Anspruch 1 aufweist.

Gelöst wird diese Aufgabe des Weiteren mit einem Verfahren, das die Merkmale von Anspruch 7 aufweist.

Bevorzugte und vorteilhafte Ausführungsformen der Erfindung sind Gegenstand der Unteransprüche.

Erfindungsgemäß ist vorgesehen, dass im Saugtrakt, der zwischen der Gasmischeinheit und dem Brennraum einen Gemischkühler und eine Drosselklappe aufweist, vor dem Brennraum der Zylindereinheit eine Mündung einer Inertgasleitung angeordnet ist. Über die Inertgasleitung ist Inertgas in den Saugtrakt einleitbar, durch das in einem an den Brennraum anschließenden Abschnitt des Saugtraktes eine nicht entzündbare Gasbarriere ausbildbar ist. Die Mündung ist dafür in einem an den Brennraum anschließenden Abschnitt des Saugtraktes angeordnet.

Die Gasbarriere wird jedenfalls während eines ersten Zeitabschnittes des Otto-Kreisprozesses, bei dem das Auslassventil noch nicht gänzlich geschlossen und das Einlassventil bereits geöffnet ist, d.h. im Wesentlichen während der Ventilüberschneidung, unmittelbar vor dem Brennraum im Saugtrakt (bzw. im Einlasskanal, der den letzten Abschnitt des Saugtraktes vor dem Brennraum bildet) angeordnet bzw. ausgebildet. Das Inertgas wird daher im Rahmen der Erfindung in den Saugtrakt eingeleitet. Verbrennungsrückstände aus dem Brennraum, die eventuell während des ersten Zeitabschnittes in den Saugtrakt eindringen, kommen daher nur mit der nicht entzündbaren Gasbarriere, nicht jedoch mit dem hochentzündlichen Brennstoffgemisch in Kontakt. Eine Rückzündung ist somit ausgeschlossen.

In einer Ausführungsform der Erfindung mündet die Inertgasleitung vor dem Brennraum und nach der Gasmischeinheit in den Saugtrakt.

Bei einem erfindungsgemäßen Verbrennungsmotor mit mehr als einer Zylindereinheit ist der Saugtrakt mit jeder der Zylindereinheiten, vorzugsweise über einen separaten Einlasskanal, verbunden. Ein erfindungsgemäßer Verbrennungsmotor mit mehreren Zylindereinheiten weist vor dem Brennraum jeder der Zylindereinheiten, insbesondere im der Zylindereinheit zugeordneten Einlasskanal, jeweils eine Mündung einer jeweiligen Inertgasleitung auf. Wenn nachfolgend bevorzugte Merkmale der Zylindereinheit, der Mündung oder der Inertgasleitung näher beschrieben werden, ist dies im Rahmen der Erfindung so zu verstehen, dass bei einem erfindungsgemäßen Verbrennungsmotor mit mehr als einer Zylindereinheit jede der Zylindereinheiten, Mündungen oder Inertgasleitungen diese Merkmale aufweisen kann.

Bevorzugt sind Ausführungsformen, bei denen die Mündung im Bereich des Einlassventils angeordnet ist, d.h. das Inertgas im Bereich des Einlassventils eingeleitet wird. Dieser Bereich liegt im Saugtrakt und daher jedenfalls außerhalb des Brennraumes der Zylindereinheit. Durch die Anordnung der Mündung im Bereich des Einlassventils erstreckt sich die Gasbarriere nur über einen sehr kurzen Abschnitt des Saugtraktes. Da für eine derartige Gasbarriere nur eine geringe Menge an Inertgas benötigt wird, wird der Wirkungsgrad des Brennstoffgemisches im Brennraum durch die Zumischung des Inertgases, die bei geöffnetem Einlassventil vom Brennstoffgemisch in den Brennraum "gespült" wird, im Wesentlichen nicht beeinflusst.

Insbesondere ist im Rahmen der Erfindung eine Ausführungsform bevorzugt, bei der das Inertgas unmittelbar stromaufwärts bzw. oberhalb eines Ventilsitzringes des Einlassventils einleitbar ist, d.h. die Mündung unmittelbar stromaufwärts bzw. oberhalb des Ventilsitzringes angeordnet ist. Mit den Begriffen "stromaufwärts" bzw. "oberhalb" ist in diesem Zusammenhang eine Position direkt an der dem Brennraum abgewandten Seite des Ventilsitzringes zu verstehen. Bei einer derartigen Anordnung der Mündung, unmittelbar vor dem Brennraum, wird nur eine äußerst geringe Menge an Inertgas zum Ausbilden der Gasbarriere benötigt und daher nur sehr wenig Inertgas in den Brennraum gespült.

Vorzugsweise weist die Mündung als Öffnung wenigstens einen durchgängigen oder unterbrochenen Ringspalt oder wenigstens eine, vorzugsweise mehr als eine, Zugangsbohrung, in den Saugtrakt auf.

Die Inertgasleitung und/oder Öffnung bzw. jede/manche der Öffnungen kann/können über ein Steuerventil verschließbar sein, das direkt an der(en) Öffnung/en anschließt oder von dieser/diesen entfernt angeordnet ist und die Inertgasleitung freigibt oder versperrt. Durch die passende Form und Ausrichtung der Mündung bzw. deren Öffnung/en kann die Einleitung des Inertgases in den Saugtrakt strömungstechnisch optimiert werden.

Möglich ist im Rahmen der Erfindung auch, dass die Mündung direkt im Ventilsitzring angeordnet ist, wobei das Inertgas auch in diesem Fall über eine oder mehrere Öffnungen in Form einer Bohrung bzw. Bohrungen oder eines Spalts bzw. Spalte im Ventilsitzring eingeleitet werden kann. Der Ventilsitzring wird dabei ebenfalls als Bestandteil des Saugtraktes angesehen.

Bei einer Ausführungsform des erfindungsgemäßen Verbrennungsmotors mit mehreren, insbesondere zwei oder mehr als zwei mit dem Saugtrakt verbundenen Zylindereinheiten, ist vorzugsweise vor dem Brennraum jeder der Zylindereinheiten jeweils eine Mündung jeweils einer Inertgasleitung angeordnet. Vorzugsweise sind bei einer derartigen Ausführungsform mehrere, insbesondere alle, der Inertgasleitungen mit einer gemeinsamen Versorgungsleitung verbunden. Eine gemeinsame Versorgungsleitung kann beispielsweise bei Verbrennungsmotoren zum Einsatz kommen, bei denen vor den Brennräumen sämtlicher Zylindereinheiten über alle Arbeitstakte hinweg konstant Inertgas eingeleitet wird.

Vorzugsweise wird als Inertgas Luft verwendet. Im Rahmen der Erfindung kann als Inertgas aber auch jedes andere schwer entzündbare Gas, wie beispielsweise gekühltes Abgas oder jedes Gas, das mit dem Brennstoffgemisch vermischt eine schwer entzündbare Gasmischung ergibt, verwendet werden.

Erfindungsgemäß weist der Saugtrakt zwischen der Gasmischeinheit und dem Brennraum einen Gemischkühler und eine Drosselklappe auf.

Vorzugsweise ist in der Luftzufuhr vor der Gasmischeinheit ein Verdichter, insbesondere ein Turboverdichter, angeordnet. Der Verdichter kann im Rahmen der Erfindung auch erst nach der Gasmischeinheit angeordnet sein. Bei Ausführungsformen, bei denen der Verdichter vor der Gasmischeinheit angeordnet ist, kann ein Abschnitt des Saugtraktes zwischen dem Verdichter und der Gasmischeinheit, vorzugsweise über ein Steuerventil, mit einer Ableitung zum Abzweigen einer Teilmenge der verdichteten Luft verbunden sein. Die Abgasleitung ist bei derartigen Ausführungsformen mit der Inertgasleitung verbunden, sodass die abgezweigte Luft als Inertgas für die Mündung verwendet wird. Da die Drosselklappe zwangsläufig zu Druckverlusten im Brennstoffgemisch führt, ist die Druckdifferenz zwischen der vor der Drosselklappe entnommenen, verdichteten Luft und dem durch die Drosselklappe druckverminderten Brennstoffgemisch hoch genug, um das Einleiten der verdichteten Luft als Inertgas zu ermöglichen, ohne dass es notwendig ist, den Druck der verdichteten Luft weiter zu erhöhen.

Zusätzlich dazu oder stattdessen kann die Inertgasleitung einen separaten Verdichter oder wenigstens ein weiteres Steuerventil aufweisen und/oder mit einen Zwischenpuffer und/oder einem Inertgasspeicher verbunden sein.

Vorzugsweise ist die Mündung derart ausgebildet, dass mit dem Inertgas bei abgestelltem Motor bzw. beim Beenden des Otto-Kreisprozesses, bevor der Motor abgeschaltet wird, wenigstens ein Abschnitt des Saugtraktes spülbar ist. Vorzugsweise ist der Saugtrakt wenigstens bis zur Gasmischeinheit spülbar. Dies lässt sich durch eine passende Dimensionierung der Einleitmenge, Einleitrichtung und Einleitgeschwindigkeit erreichen. Bei abgestelltem Motor bleibt somit kein explosives, durch Fremdeinwirkung zündbares Brennstoffgemisch im Saugtrakt zurück. Bei Ausführungsformen mit mehreren Zylindereinheiten sind vorzugsweise alle Abschnitte des Saugtraktes, die an die Brennräume der Zylindereinheiten anschließen, d.h. die Einlasskanäle, insbesondere der gesamte Saugtrakt bis zur Gasmischeinheit, spülbar.

Die Inertgasleitung des erfindungsgemäßen Verbrennungsmotors weist vorzugsweise ein weiteres Steuerventil auf, durch das die Inertgasleitung, wie bereits erläutert, geöffnet oder geschlossen werden kann, um damit Inertgas durch die Mündung in den Saugkanal einzuleiten oder die Inertgaszufuhr in den Saugkanal zu unterbrechen.

Bei einer bevorzugten Ausführungsform des Verbrennungsmotors weist dieser einen effektiven Mitteldruck von wenigstens 12 bar, vorzugsweise von wenigstens 15 bar, auf. Der effektive Mitteldruck $p_{me}$ errechnet sich dabei nach der Formel

$$p_{me} = \frac{2 * \pi * M}{V_h * i} \quad ,$$

wobei M das Nenn-Drehmoment, i die Anzahl der Arbeitsspiele pro Umdrehung und $V_h$ das Zylindervolumen des Verbrennungsmotors ist.

Die Erfindung betrifft weiters ein Verfahren zum Verbrennen eines Brennstoffgemisches mit Wasserstoff und Luft in einem Otto-Kreisprozess in einem Verbrennungsmotors, der wenigstens eine Zylindereinheit mit einem damit verbundenen Saugtrakt aufweist. Die Zylindereinheit weist einen Brennraum, wenigstens ein Einlassventil und wenigstens ein Auslassventil auf. Der Saugtrakt weist wenigstens eine Gasmischeinheit zum Erzeugen des Brennstoffgemisches auf.

Beim erfindungsgemäßen Verfahren wird in den Saugtrakt vor dem Brennraum der Zylindereinheit wenigstens temporär Inertgas eingeleitet, sodass in einem an den Brennraum anschließenden Abschnitt des Saugtraktes eine Gasbarriere aus nicht entzündbarem Gas gebildet wird. Die Gasbarriere wird insbesondere während eines ersten Zeitraumes des Otto-Kreisprozesses, bei dem sowohl das Auslassventil als auch das Einlassventil zumindest teilweise geöffnet sind, d.h. im Wesentlichen während der Ventilüberschneidung, gebildet. Der erste Zeitraum beginnt vor dem Ende des Ausstoßtaktes und endet kurz nach Beginn des Ansaugtaktes. Im Wesentlichen wird das Inertgas während des gesamten ersten Zeitraums eingeleitet, wobei der erste Zeitraum auch kurz vor dem kompletten Verschließen des Auslassventils enden kann, solange gewährleistet wird, dass der Saugtrakt bis zum vollständigen Ausstoß der Verbrennungsrückstände vom Brennraum durch die Gasbarriere abgeschirmt ist.

Kern des erfindungsgemäßen Verfahrens ist, dass sich im Saugtrakt bei geschlossenem Einlassventil direkt vor diesem eine Gasbarriere aus Inertgas oder aus einer schwer entzündbaren Mischung aus dem Inertgas und dem Brennstoffgemisch aufbaut bzw. bildet, die bei geöffnetem Einlassventil durch das nachströmende Brennstoffgemisch in den Brennraum gespült wird. Die für die Gasbarriere benötigte Menge an Inertgas ist im Verhältnis zur Gasmenge, die in einem Arbeitstakt im Brennraum verbrannt wird, so gering, dass die Verbrennungseigenschaften des Brennstoffgemisches im Brennraum kaum beeinflusst werden.

Das erfindungsgemäße Verfahren kann auch in bzw. mit einem Verbrennungsmotor mit mehreren Zylindereinheiten durchgeführt werden, wobei in diesem Fall vor dem Brennraum eines jeden der Zylinder wenigstens temporär Inertgas in den Saugtrakt eingeleitet und eine Gasbarriere erzeugt wird. Sofern sich die vorstehend und nachfolgend beschriebenen Merkmale bzw. Schritte des Verfahrens nur auf eine einzelne Zylindereinheit beziehen, werden die Merkmale bzw. Schritte des Verfahrens im Rahmen der Erfindung jedoch bei einer Durchführungsform des Verfahrens mit mehreren Zylindereinheiten - in Analogie zum erfindungsgemäßen Verbrennungsmotor mit mehreren Zylindereinheiten - bei jeder der Zylindereinheiten verwirklicht bzw. durchgeführt.

Im Rahmen des erfindungsgemäßen Verfahrens wird vorzugsweise Luft als Inertgas eingeleitet. Als Inertgas können aber auch andere schwer entzündbare Gase eingeleitet werden. Hierzu wird auf die Erklärung zum erfindungsgemäßen Verbrennungsmotor verwiesen.

Besonders bevorzugt wird beim erfindungsgemäßen Verfahren die für das Brennstoffgemisch benötigte Luft vor der Gasmischeinheit über einen Verdichter, vorzugsweise einen Turboverdichter, verdichtet und eine Teilmenge der verdichteten Luft zwischen dem Verdichter und der Gasmischeinheit abgeleitet bzw. abgezweigt. Diese abgeleitete Teilmenge der verdichteten Luft wird als Inertgas wieder in den Saugtrakt eingeleitet. Die Vorteile eines derartigen Verfahrensablaufs wurden bereits im Zusammenhang mit der korrespondierenden Ausführungsform des erfindungsgemäßen Verbrennungsmotors erläutert.

In einer bevorzugten Durchführungsform des erfindungsgemäßen Verfahrens ist vorgesehen, dass das Inertgas im Otto-Kreisprozess über einen zweiten Zeitraum, der nach dem Schließen des Einlassventils beginnt und nach dem Ende des ersten Zeitraums endet, eingeleitet wird. Bei einer derartigen Steuerung der Inertgaszufuhr kann nur relativ wenig Inertgas in den Brennraum eindringen, sodass die Verbrennungseigenschaften des Brennstoffgemisches kaum beeinflusst werden.

In einer alternativen, ebenfalls bevorzugten Durchführungsform des Verfahrens wird das Inertgas im Otto-Kreisprozess über einen dritten Zeitraum eingeleitet, der während des Schließens des Einlassventils, insbesondere am Ende eines Ansaugtaktes des Otto-Kreisprozesses, beginnt und nach dem Ende des ersten Zeitraums endet. Mit einer derartigen Steuerung der Inertgaszufuhr kann sichergestellt werden, dass nach dem Schließen des Einlassventiles kein Brennstoffgemisch zwischen der Mündung und dem Ventil verbleibt.

In einer weiteren alternativen Durchführungsform des Verfahrens wird das Inertgas während des gesamten Otto-Kreisprozesses eingeleitet. Bei einer derartigen Durchführungsform wird die Inertgaszufuhr über den Inertgasdruck und/oder die Dimensionierung der Mündung so gesteuert bzw. eingestellt, dass sich - wie bereits beschrieben - bei geschlossenem Einlassventil zwar eine schwer entzündbare Gasbarriere aufbaut, die bei geöffnetem Einlassventil in den Brennraum strömende Menge an Inertgas (d.h. sowohl die in der Gasbarriere enthaltene Menge, als auch die zusätzlich mit dem Brennstoffgemisch einströmende Menge) jedoch möglichst gering ist, sodass das im Brennraum enthaltene Brennstoffgemisch trotzdem gut entzündbar und weitgehend unverändert in seinen Verbrennungseigenschaften ist.

Die Gasbarriere besteht vorzugsweise im Wesentlichen aus Inertgas. Da das Inertgas nicht entzündlich ist, kann somit besonders einfach eine sichere Gasbarriere gebildet werden.

Im Rahmen der Erfindung kann die Gasbarriere jedoch auch aus einer schwer bzw. nicht entzündbaren Mischung aus Brennstoffgemisch und Inertgas bestehen. Beim Ausbilden einer derartigen Gasbarriere wird nur eine sehr geringe Menge an Inertgas in den Brennraum gespült, sodass das Brennverhalten des Brennstoffgemisches im Brennraum kaum verändert wird.

Im Rahmen des erfindungsgemäßen Verfahrens kann wenigstens ein Abschnitt des Saugtraktes beim abgeschalteten Motor bzw. nach dem Beenden des Otto-Kreisprozesses beim Abschalten des Motors, mit Inertgas gespült werden. Dadurch kann sichergestellt werden, dass bei abgestelltem Motor sämtliche Reste des Wasserstoff-Luft-Gemisches aus dem Saugtrakt entfernt sind, damit kein hochentzündliches Brennstoffgemisch im Saugtrakt zurückbleibt.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:

Fig. 1    eine schematische Ansicht eines aus dem Stand der Technik bekannten Gasmotors mit einer Zylindereinheit und einem Saugtrakt,

Fig. 2    eine schematische Ansicht eines aus dem Stand der Technik bekannten Wasserstoff-Verbrennungsmotors mit einer Zylindereinheit und einem Saugtrakt,

Fig. 3    eine schematische Ansicht eines erfindungsgemäßen Verbrennungsmotors mit einer Zylindereinheit und einem Saugtrakt gemäß einer ersten Ausführungsform,

Fig. 4    eine schematische Ansicht des erfindungsgemäßen Verbrennungsmotors mit einer Zylindereinheit und einem Saugtrakt gemäß einer weiteren Ausführungsform,

Fig. 5    ein zeitlicher Verlauf des Öffnens der Ventile und der Inertgasleitung gemäß einer ersten Durchführungsform des erfindungsgemäßen Verfahrens,

Fig. 6    der zeitliche Verlauf des Öffnens der Ventile und der Inertgasleitung gemäß einer weiteren Durchführungsform des erfindungsgemäßen Verfahrens, und

Fig. 7    der zeitliche Verlauf des Öffnens der Ventile und der Inertgasleitung gemäß noch einer weiteren Durchführungsform des erfindungsgemäßen Verfahrens.

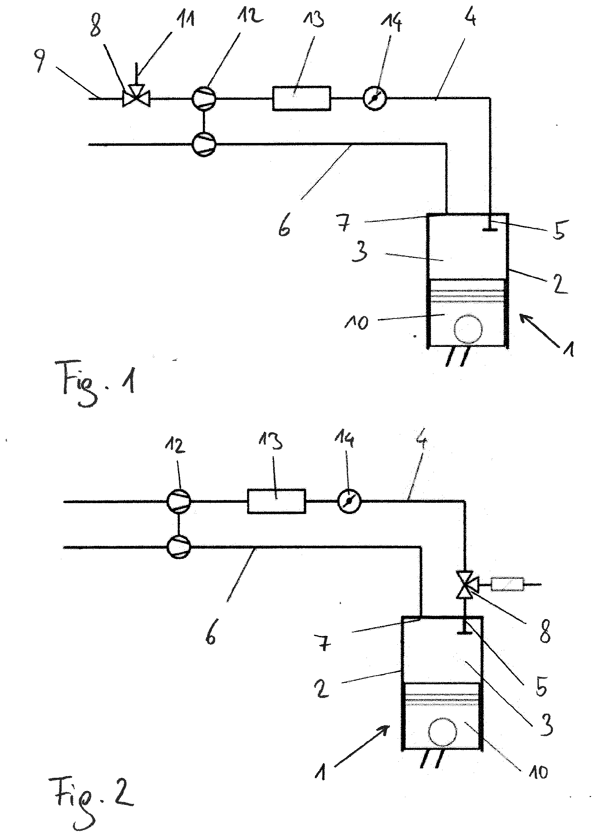

Die Fig. 1 und 2 zeigen jeweils einen aus dem Stand der Technik bekannten Verbrennungsmotors mit einer Zylindereinheit 1 und einem Saugtrakt in einer stark vereinfachten bzw. schematischen Darstellung.

Die Zylindereinheit 1 umfasst einen Zylinder 2 mit einem Brennraum 3, in dem ein Brennstoffgemisch aus Luft und einem Brenngas verbrennbar ist. Der Verbrennungsmotor gemäß Fig. 1 ist jedoch nicht für die Verwendung von Wasserstoff als Brenngas ausgelegt.

Ein Saugtrakt 4 des Verbrennungsmotors ist über ein Einlassventil 5 mit dem Brennraum 3 des Zylinders 2 der Zylindereinheit 1 verbunden. Über den Saugtrakt 4 wird das Brennstoffgemisch in den Brennraum 3 geleitet. Im Zylinder 2 ist ein Kolben 10 angeordnet.

Ein Auslasskanal 6, zum Ableiten des Abgases, d.h. der Verbrennungsrückstände, aus dem Brennraum 3 ist über ein Auslassventil 7 mit dem Brennraum verbunden.

Der Saugtrakt 4 umfasst eine Gasmischeinheit 8, in der Luft aus einer Luftzufuhrleitung 9 mit Brenngas aus einer Brenngasleitung 11 vermischt wird, um ein Brennstoffgemisch zu erzeugen. Die Gasmischeinheit 8 kann im Rahmen der Erfindung als mit dem Saugtrakt 4 verbunden, aber auch als Bestandteil des Saugtraktes 4 angesehen werden.

Stromabwärts nach der Gasmischeinheit 8 weist der Saugtrakt 4 einen Verdichter 12, insbesondere einen Turboverdichter, auf, durch den das Brennstoffgemisch verdichtet wird. Insbesondere ist der Verdichter 12 ein Abgasturbolader, der über Abgas des Auslasskanals 6 betrieben wird. Der Verdichter 12 kann auch stromaufwärts vor der Gasmischeinheit 8 angeordnet sein und lediglich die zugeführte Luft verdichten.

Nach dem Verdichter 12 sind im Saugtrakt 4 ein Gemischkühler 13 und eine Drosselklappe 14 angeordnet. Durch die Drosselklappe 14 entstehen Druckverluste im Brennstoffgemisch.

Bei dem in Fig. 1 dargestellten Verbrennungsmotor wird in der Gasmischeinheit 8 das Brennstoffgemisch aus Brenngas und Luft erzeugt, das anschließend verdichtet, gekühlt und gedrosselt wird. Entlang des Saugtraktes 4 erhöht sich der Durchmischungsgrad zwischen der Luft und dem Brenngas, wobei der Durchmischungsgrad im Wesentlichen direkt proportional zur Länge, die das Brennstoffgemisch im Saugtrakt 4 zurücklegt, ist. Ein derartig durchmischtes Brennstoffgemisch ist sehr homogen und mit hohem Wirkungsgrad und geringer Emissionsabgabe verbrennbar.

Durch die Öffnung des Einlassventils 5 kann das Brennstoffgemisch in den Brennraum 3 strömen, in dem es verdichtet und anschließend verbrannt wird. Das Abgas bzw. die Verbrennungsrückstände werden bei geöffnetem Auslassventil 7 vom Brennraum 3 in den Auslasskanal 6 ausgestoßen.

Der Verbrennungsmotor gemäß Fig. 2 ist für die Verbrennung von Wasserstoff ausgelegt. Im Gegensatz zu dem in Fig. 1 dargestellten Verbrennungsmotor ist beim in Fig. 2 dargestellten Wasserstoff-Verbrennungsmotor die Gasmischeinheit 6 im Saugtrakt 4 erst unmittelbar vor dem Brennraum 3, d.h. in einem an das Einlassventil 5 anschließenden Abschnitt des Saugtraktes 4, angeordnet. Da der Abschnitt des Saugtraktes 4 zwischen der Gasmischeinheit 8 und dem Brennraum 3 so kurz ist, dass sich dort keine nennenswerte Menge des Brennstoffgemischs sammeln kann, besteht bei einer derartigen Bauform keine Gefahr einer Rückzündung.

Nachteilig an einem wie in Fig. 2 dargestellten, aus dem Stand der Technik bekannten Wasserstoff-Verbrennungsmotor ist, dass das in den Brennraum 3 eingeleitete Brennstoffgemisch aus Wasserstoff und Luft sehr inhomogen ist, da die vom Brennstoffgemisch im Saugtrakt 4 zurückgelegte Länge nur sehr kurz ist.

Die vorstehend beschriebenen Eigenschaften und Merkmale der Verbrennungsmotoren gemäß Stand der Technik sind auch für die nachfolgend beschriebenen, erfindungsgemäßen Verbrennungsmotoren zutreffend, sofern sie nicht durch andere bzw. zusätzliche Merkmale ersetzt bzw. ergänzt werden.

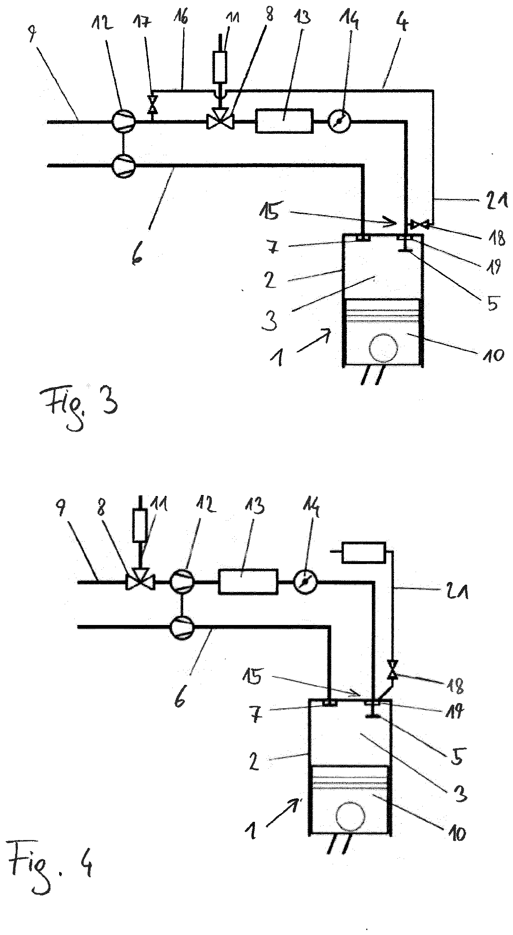

In den Fig. 3 und 4 sind - stark vereinfacht - zwei verschiedene Ausführungsformen eines erfindungsgemäßen Verbrennungsmotors mit jeweils einer Zylindereinheit 1 und einem Saugtrakt 4 dargestellt.

Bei beiden Ausführungsformen des Verbrennungsmotors ist der Brennraum 3 der Zylindereinheit 1 über das Einlassventil 5 mit dem Saugtrakt 4 verbunden.

Der Saugtrakt 4 weist jeweils eine Gasmischeinheit 8, in der Luft aus der Luftzufuhrleitung 9 mit Wasserstoff aus der Brenngasleitung 11 vermischt wird, einen Verdichter 12, einen Gemischkühler 13 und eine Drosselklappe 14 auf.

Anders als bei aus dem Stand der Technik bekannten Wasserstoff-Verbrennungsmotoren ist die Gasmischeinheit 8 beim erfindungsgemäßen Wasserstoff-Verbrennungsmotor bereits vor dem Gemischkühler 13 und der Drosselklappe 14 angeordnet, sodass das Brennstoffgemisch eine hinreichend lange Weglänge im Saugtrakt 4 zurücklegt, und ein hoher Durchmischungsgrad des Brennstoffgemisches bei Eintritt in den Brennraum 3 erreicht wird.

Damit beim erfindungsgemäßen Verbrennungsmotor keine Rückzündung stattfinden kann, weist er vorzugsweise unmittelbar vor dem Brennraum 3 eine Mündung 15 einer Inertgasleitung 21 auf, durch die Inertgas in den Saugtrakt 4 eingeblasen wird. Dadurch wird in einem Abschnitt des Saugtraktes 4 unmittelbar vor dem Brennraum 3 eine Gasbarriere aus schwer bzw. nicht entzündbarem Gas ausgebildet.

Bei der in Fig. 3 dargestellten Ausführungsform ist der Verdichter 12 im Saugtrakt 4 vor der Gasmischeinheit 8, d.h. in der Luftzufuhrleitung 9, angeordnet, sodass die Luft bereits vor der Vermischung mit Wasserstoff verdichtet wird. Ein Abschnitt des Saugtraktes 4 zwischen dem Verdichter 12 und der Gasmischeinheit 8 ist mit einer Ableitung 16 verbunden, über die eine Teilmenge der verdichteten Luftabgezweigt wird. Die Ableitung 16 kann zur Regulierung der abgezweigten Luftmenge ein Steuerventil 17 aufweisen.

Die Mündung 15 ist bei der in Fig. 3 dargestellten Ausführungsform in einem Abschnitt des Saugtraktes 4 unmittelbar vor dem Einlassventil 5, d.h. kurz vor dem Brennraum 3, angeordnet. Weiters ist die Inertgasleitung 21 mit der Ableitung 16 verbunden. Die Inertgasleitung 21 kann über ein weiteres Steuerventil 18 geöffnet und geschlossen werden.

Somit wird bei der in Fig. 3 dargestellten Ausführungsform des erfindungsgemäßen Verbrennungsmotors die vor der Gasmischeinheit 8 entnommene, verdichtete Luft über die Mündung 15 der Inertgasleitung 21 in den Saugtrakt 4 eingeleitet.

Die mit Hilfe des Inertgases ausbildbare Gasbarriere wird in dem äußerst kurzen Abschnitt des Saugtraktes 4 zwischen der Mündung 15 und dem Einlassventil 5 ausgebildet. Sie verhindert die Rückzündung des hochentzündlichen Brennstoffgemisches aus Luft und Wasserstoff im Saugtrakt 4, wenn gleichzeitig sowohl das Einlassventil 5 als auch das Auslassventil 7 geöffnet sind. Die Gasbarriere kann auch stromaufwärts in den Saugtrakt 4 zurückreichen, d.h. sich bis in einen Abschnitt des Saugtraktes 4 erstrecken, der stromaufwärts oberhalb der Mündung 15 angeordnet ist.

Da das Brennstoffgemisch beim Durchströmen der Drosselklappe 14 an Druck verliert, ist die Druckdifferenz zwischen der als Inertgas verwendeten, verdichteten Luft, die vor der Drosselklappe 14 entnommen wird, und dem Brennstoffgemisch nach der Drosselklappe 14 15 ausreichend hoch, um ohne weiteres Verdichten der bereits verdichteten Luft die Gasbarriere ausbilden zu können.

Bei der in Fig. 3 dargestellten Ausführungsform des Verbrennungsmotors kann die Ableitung 16 statt mit dem Saugtrakt 4 auch mit dem Auslasskanal 6, vorzugsweise vor einem Abgasturbolader (falls ein derartiger Verdichter 12 verwendet wird), verbunden sein. Bei einer derartigen Ausführungsform ist als Inertgas das aus dem Brennraum 3 ausgestoßene Abgas über die Mündung 15 der Inertgasleitung 21 in den Saugtrakt 4 einleitbar. Bei Bedarf weist die Ableitung 16 bzw. die Inertgasleitung 21 in diesem Fall noch einen zusätzlichen Verdichter auf, um das als Inertgas genutzte Abgas auf ein höheres Druckniveau anzuheben.

Bei der in Fig. 4 dargestellten Ausführungsform des Verbrennungsmotors ist die Mündung 15 direkt an einem Ventilsitzring 19, d.h. stromaufwärts unmittelbar oberhalb des Ventilsitzringes 19, des Einlassventils 5 angeordnet. Bei dieser Ausführungsform wird die Gasbarriere direkt bzw. unmittelbar vor dem Brennraum 3 ausgebildet, wobei auch bei dieser Ausführungsform die Gasbarriere stromaufwärts in den Saugtrakt 4 zurück reichen kann.

Die Inertgasleitung 21 ist mit einem Inertgasspeicher verbunden, und kann über ein Steuerventil 18 geöffnet und geschlossen werden. Vorzugsweise weist das über den Inertgasspeicher bereitgestellte Inertgas bereits einen höheren Druck auf, als das Brennstoffgemisch im Abschnitt des Saugtraktes 4, in den das Inertgas über die Mündung 15 eingeleitet wird, der Druck des aus dem Inertgasspeicher kommenden Inertgases kann jedoch auch erst in der Inertgasleitung 21 über einen weiteren Verdichter erhöht werden.

Weiters ist bei der in Fig. 4 dargestellten Ausführungsform des Verbrennungsmotors der Verdichter 12 erst nach der Gasmischeinheit 8 angeordnet, sodass nicht nur die Luft, sondern bereits das Brennstoffgemisch aus Luft und Wasserstoff verdichtet wird. Der Verdichter 12 kann bei einer derartigen Ausführungsform, bei der die Inertgasleitung 21 mit dem Inertgasspeicher verbunden ist, auch vor der Gasmischeinheit 8 in der Luftzufuhr 9 angeordnet sein.

Die Merkmale der oben beschriebenen bzw. in den Fig. 3 und 4 dargestellten Ausführungsformen können im Rahmen der Erfindung beliebig miteinander kombiniert werden. Beispielsweise kann die Mündung 15 auch bei einer Ausführungsform des erfindungsgemäßen Verbrennungsmotors, bei der als Inertgas verdichtete Luft, die aus dem Saugtrakt 4 entnommen wird, verwendet wird, direkt am (bzw. im) Ventilsitzring 19 angeordnet sein.

Weiters kann auch bei Ausführungsformen, bei denen dem Saugtrakt 4 entnommene, verdichtete Luft als Inertgas dient, ein zusätzlicher Verdichter, der den Druck des Inertgases in der mit der Ableitung 16 verbundenen Inertgasleitung 21 erhöht, verwendet werden.

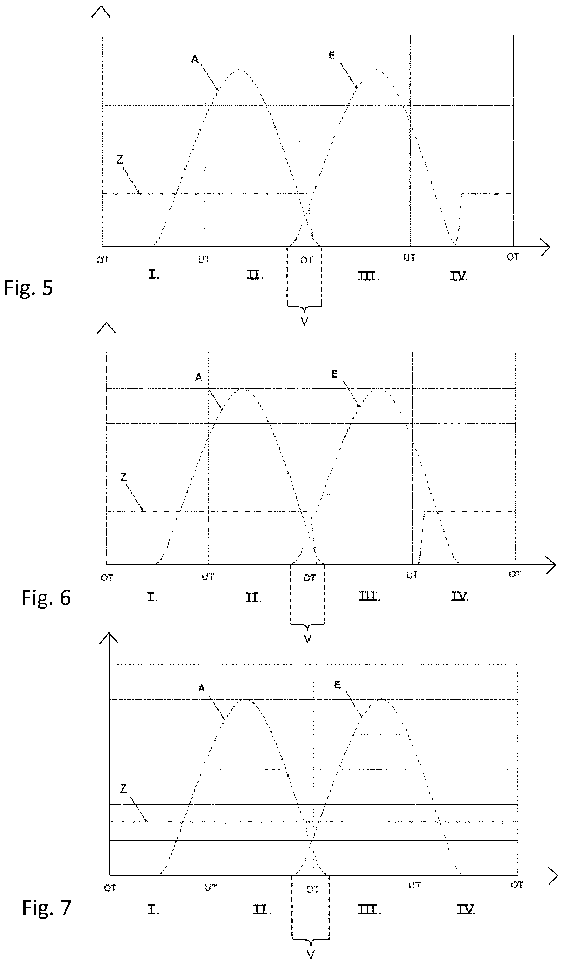

Die Fig. 5 bis 7 zeigen Diagramme, in denen der kurvenförmige Verlauf des Öffnens E des Einlassventils 5, des Öffnens A des Auslassventils 7, und des Öffnens Z der Inertgasleitung 21 über die vier Takte I., II., III., IV. des dem erfindungsgemäßen Verfahren zugrunde liegenden Otto-Kreisprozesses schematisch dargestellt sind. Auf der Abszissenachse der Diagramme ist die Zeit bzw. sind die Takte des Otto-Kreisprozesses dargestellt.

Bei Durchführungsformen des Verfahrens in einem Verbrennungsmotor mit mehr als einer Zylindereinheit 1 wird selbstverständlich in jeder der Zylindereinheiten 1 das aus dem Saugtrakt 4 zugeführte Brennstoffgemisch in einem Otto-Kreisprozess verbrannt. Die in den Fig. 5 bis 7 dargestellten Diagramme gelten in diesem Fall für jede einzelne der Zylindereinheiten 1. Die Otto-Kreisprozesse der Zylindereinheiten verlaufen bei dieser Durchführungsform des Verfahrens wie an sich bekannt zeitlich versetzt.

Der Verlauf des Öffnens Z der Inertgasleitung 21 ist in jedem der Diagramme der Fig. 5 bis 7 anders, da jedes Diagramm eine unterschiedliche Durchführungsform des erfindungsgemäßen Verfahrens beschreibt. Der Verlauf des Öffnens E des Einlassventils 5 und der Verlauf des Öffnens A des Auslassventils 7 sind bei allen Durchführungsformen und in allen Diagrammen gleich.

Der in den Diagrammen der Fig. 5 bis 7 dargestellte Verlauf des Öffnens Z der Inertgasleitung 21 zeigt in vereinfachter Form, wann während des Otto-Kreisprozesses die Inertgasleitung 21 geöffnet ist, d.h. wann von der Inertgasleitung 21 Inertgas über die Mündung 15 in den Saugtrakt 4 (wozu auch ein Bereich des Einlassventils 5 zählt) eingeleitet wird, und wann die Inertgasleitung 21 geschlossen ist, d.h. kein Inertgas über die Mündung 15 in den Saugtrakt 4 eingeleitet wird. Das Öffnen Z der Inertgasleitung 21 kann insbesondere als Öffnen des weiteren Steuerventils 18 angesehen werden, wenn ein derartiges weiteres Steuerventil 18 vorhanden ist.

Der Kurvenverlauf in den Diagrammen beginnt jeweils mit dem zwischen einem oberen Totpunkt OT und einem unteren Totpunkt UT des Kolbens 10 verlaufenden Arbeitstakt I. des Otto-Kreisprozesses.

In einem auf den Arbeitstakt I. folgenden Ausstoßtakt II. wird das bei der Verbrennung des Brennstoffgemisches entstehende Abgas zusammen mit Verbrennungsrückständen in den Auslasskanal 6 ausgestoßen. Dafür wird das Auslassventil 7 bereits im Arbeitstakt I. geöffnet und im Wesentlichen mit dem Ende des Ausstoßtaktes II. geschlossen.

In einem auf den Ausstoßtakt II. folgenden Ansaugtakt III. wird das Brennstoffgemisch aus Luft und Wasserstoff aus dem Saugtrakt 4 in den Brennraum 3 gesaugt. Zum Ansaugen des Brennstoffgemisches wird das Einlassventil 5 geöffnet.

Anschließend an den Ansaugtakt III. folgt ein Verdichtungstakt IV., in dem das Brennstoffgemisch im Brennraum 3 verdichtet wird.

Das Einlassventil 5 wird in der Regel bereits kurz vor Beginn des Ansaugtaktes III. geöffnet, sodass über einen kurzen Zeitraum hinweg sowohl das Auslassventil 7 als auch das Einlassventil 5 gleichzeitig geöffnet sind. Dieser Zeitabschnitt wird als Ventilüberschneidung bezeichnet. Da der Inhalt des Brennraumes noch nicht vollständig ausgestoßen wurde, können sich während der Ventilüberschneidung noch heiße Verbrennungsrückstände im Brennraum 3 befinden.

Gemäß einer ersten in Fig. 5 dargestellten Durchführungsform des erfindungsgemäßen Verfahrens wird die Inertgasleitung 21 nach dem Ende eines ersten Zeitraums V, in dem sowohl das Auslassventil 7 als auch das Einlassventil 5 geöffnet sind, geschlossen. Der erste Zeitraum V erstreckt sich im Wesentlichen über die Dauer der Ventilüberschneidung, er kann jedoch auch schon kurz bevor das Auslassventil 7 komplett geschlossen ist, enden, sodass die Inertgasleitung 21 schon kurz bevor das Auslassventil 7 komplett geschlossen ist, geschlossen wird. Nachdem das Einlassventil 5 vollständig geschlossen ist, wird die Inertgasleitung 21 wieder geöffnet.

Gemäß der in Fig. 6 dargestellten, weiteren Durchführungsform des erfindungsgemäßen Verfahrens wird die Inertgasleitung 21 ebenfalls mit dem Ende des ersten Zeitraums V geschlossen. In diesem Fall wird die Inertgasleitung 21 jedoch schon vor dem vollständigen Schließen des Einlassventils 5, im Wesentlichen kurz nach dem Ende des Ansaugtaktes III. wieder geöffnet.

Bei der in Fig. 7 dargestellten Durchführungsform des erfindungsgemäßen Verfahrens ist die Inertgasleitung 21 durchgehend, d.h. während des gesamten Otto-Kreisprozesses, geöffnet, sodass durchgehend ein bestimmter Volumenstrom des Inertgases durch die Mündung 15 eingeleitet wird.

In den dargestellten Durchführungsformen weist die den Verlauf des Öffnens E des Einlassventils 5 darstellende Kurve eine Sinusform auf, während das Einlassventil 5 geöffnet ist, und verläuft flach entlang der Abszissenachse, während das Einlassventil 5 geschlossen ist. Dasselbe gilt für die den Verlauf des zeitversetzten Öffnens A des Auslassventils 7 darstellende Kurve. In den Zeiträumen, in denen die Ventile 5, 7 geöffnet sind, können die Kurven, welche die Verläufe des Öffnens E des Einlassventils 5 und des Öffnens A Auslassventils 7 darstellen, auch nur eine einer Sinuskurve ähnliche Form oder eine von einer Sinuskurve verschiedene Form aufweisen.

Die Kurve des Öffnens Z der Inertgasleitung 21 verläuft, während die Inertgasleitung 21 geöffnet ist, d.h. während Inertgas über die Inertgasleitung 21 an der Mündung 15 bereitgestellt und von dieser zum Ausbilden einer Gasbarriere zwischen der Gasmischeinheit 8 und dem Brennraum 3 eingeblasen wird, auf einem erhöhten, von der Abszissenachse beabstandeten Niveau, und während die Inertgasleitung 21 geschlossen ist, entlang der Abszissenachse.

Bezugszeichenliste

| | | | | | |
|---|---|---|---|---|---|
| 1 | Zylindereinheit | | I. | Arbeitstakt |
| 2 | Zylinder | | II. | Ausstoßtakt |
| 3 | Brennraum | | III. | Ansaugtakt |
| 4 | Saugtrakt | | IV. | Verdichtungstakt |
| 5 | Einlassventil | | UT | Unterer Totpunkt |
| 6 | Auslasskanal | | OT | Oberer Totpunkt |
| 7 | Auslassventil | | | |
| 8 | Gasmischeinheit | | | |
| 9 | Luftzufuhrleitung | | | |
| 10 | Kolben | | | |

(fortgesetzt)

| 11 | Brenngasleitung |
|----|-----------------|
| 12 | Verdichter |
| 13 | Gemischkühler |
| 14 | Drosselklappe |
| 15 | Mündung |
| 16 | Ableitung |
| 17 | Steuerventil |
| 18 | weiteres Steuerventil |
| 19 | Ventilsitzring |
| 20 | --- |
| 21 | Inertgasleitung |
| A | Verlauf des Öffnens des Auslassventils 7 |
| E | Verlauf des Öffnens des Einlassventils 5 |
| Z | Verlauf des Öffnens der Inertgasleitung 21 |
| V | Ventilüberschneidung |

**Patentansprüche**

1. Verbrennungsmotor zum Verbrennen eines Wasserstoff und Luft enthaltenden Brennstoffgemisches in einem Otto-Kreisprozess, wobei der Verbrennungsmotor wenigstens eine Zylindereinheit (1) und einen damit verbunden Saugtrakt (4) aufweist, wobei die Zylindereinheit (1) einen Brennraum (3), wenigstens ein Einlassventil (5) und wenigstens ein Auslassventil (7) aufweist, und wobei der Saugtrakt (4) wenigstens eine Gasmischeinheit (8) zum Erzeugen des Brennstoffgemisches aufweist, **dadurch gekennzeichnet, dass** im Saugtrakt (4), der zwischen der Gasmischeinheit (8) und dem Brennraum (3) einen Gemischkühler (13) und eine Drosselklappe (14) aufweist, vor dem Brennraum (3) der Zylindereinheit (1) eine Mündung (15) einer Inertgasleitung (21) angeordnet ist.

2. Verbrennungsmotor nach Anspruch 1, **dadurch gekennzeichnet, dass** die Mündung (15) im Bereich des Einlassventils (5) angeordnet ist und/oder dass die Mündung (15) unmittelbar stromaufwärts eines Ventilsitzringes (19) des Einlassventils (5) angeordnet ist und/oder dass die Mündung (15) wenigstens einen durchgängigen oder unterbrochenen Ringspalt oder wenigstens eine, vorzugsweise mehr als eine, Zugangsbohrung in den Saugkanal (4) aufweist.

3. Verbrennungsmotor nach Anspruch 1 oder 2, **dadurch gekennzeichnet, dass** er zwei oder mehr als zwei mit dem Saugtrakt (4) verbundene Zylindereinheiten (1) aufweist, dass im Saugtrakt (4) vor dem Brennraum (3) jeder der Zylindereinheiten (1) jeweils eine Mündung (15) jeweils einer Inertgasleitung (21) angeordnet ist, und dass zwei oder mehr der Inertgasleitungen (21), insbesondere alle Inertgasleitungen (21), mit einer gemeinsamen Versorgungsleitung für Inertgas verbunden sind.

4. Verbrennungsmotor nach einem der Ansprüche 1 bis 3, **dadurch gekennzeichnet, dass** als Inertgas Luft einleitbar ist.

5. Verbrennungsmotor nach einem der Ansprüche 1 bis 4, **dadurch gekennzeichnet, dass** in einer Luftzufuhrleitung (9) vor der Gasmischeinheit (8) ein Verdichter (12), vorzugsweise ein Turboverdichter, angeordnet ist, dass ein Abschnitt des Saugtraktes (4) zwischen dem Verdichter (12) und der Gasmischeinheit (8), vorzugsweise über ein Steuerventil (17), mit einer Ableitung (16) zum Abzweigen einer Teilmenge der verdichteten Luft verbunden ist, und dass die Inertgasleitung (21) mit der Ableitung (16) verbunden ist.

6. Verbrennungsmotor nach einem der Ansprüche 1 bis 5, **dadurch gekennzeichnet, dass** er einen effektiven Mitteldruck ($p_{me}$) von wenigstens 12 bar, vorzugsweise von wenigstens 15 bar, aufweist.

7. Verfahren zum Verbrennen eines Wasserstoff und Luft enthaltenden Brennstoffgemisches in einem Otto-Kreisprozess in einem Verbrennungsmotor, der wenigstens eine Zylindereinheit (1) und einen damit verbundenen Saugtrakt (4) aufweist, wobei die Zylindereinheit (1) einen Brennraum (3), wenigstens ein Einlassventil (5) und wenigstens ein Auslassventil (7) aufweist, und wobei der Saugtrakt (4) wenigstens eine Gasmischeinheit (8) zum Erzeugen des Brennstoffgemisches aufweist, **dadurch gekennzeichnet, dass** in den Saugtrakt (4), der zwischen der Gasmischeinheit (8) und dem Brennraum (3) einen Gemischkühler (13) und eine Drosselklappe (14) aufweist, vor dem Brennraum (3) wenigstens temporär Inertgas, vorzugsweise Luft, eingeleitet wird, sodass in einem an den Brennraum (3) anschließenden Abschnitt des Saugtraktes (4) eine Gasbarriere aus nicht entzündbarem Gas gebildet wird.

8. Verfahren nach Anspruch 7, **dadurch gekennzeichnet, dass** die für das Brennstoffgemisch benötigte Luft vor der Gasmischeinheit (8) mit einem Verdichter (12), vorzugsweise mit einem Turboverdichter, verdichtet wird, dass eine Teilmenge der verdichteten Luft zwischen dem Verdichter (12) und der Gasmischeinheit (8) abgeleitet wird, und dass die abgeleitete Teilmenge der Luft als Inertgas in den Saugtrakt (4) eingeleitet wird.

9. Verfahren nach Anspruch 7 oder 8, **dadurch gekennzeichnet, dass** während eines ersten Zeitraumes (V) des Otto-Kreisprozesses sowohl das Auslassventil (7) als auch das Einlassventil (5) zumindest teilweise geöffnet sind, und dass das Inertgas im Wesentlichen während des gesamten Zeitraumes (V) eingeleitet wird, sodass die Gasbarriere im Wesentlichen während des gesamten Zeitraumes (V) gebildet wird.

10. Verfahren nach Anspruch 9, **dadurch gekennzeichnet, dass** das Inertgas im Otto-Kreisprozess über einen zweiten Zeitraum, der nach dem Schließen des Einlassventils (5) beginnt und nach dem Ende des ersten Zeitraumes (V) endet, eingeleitet wird, oder dass das Inertgas im Otto-Kreisprozess über einen dritten Zeitraum, der während des Schließens des Einlassventils (5), insbesondere am Ende eines Ansaugtaktes (III.) des Otto-Kreisprozesses, beginnt und nach dem Ende des ersten Zeitraumes (V) endet, eingeleitet wird.

11. Verfahren nach Anspruch 7 oder 8, **dadurch gekennzeichnet, dass** das Inertgas während des gesamten Otto-Kreisprozesses eingeleitet wird.

12. Verfahren nach einem der Ansprüche 7 bis 11, **dadurch gekennzeichnet, dass** beim bzw. nach dem Beenden des Otto-Kreisprozesses wenigstens ein Abschnitt des Saugtraktes (4) mit Inertgas gespült wird.

13. Verfahren nach einem der Ansprüche 7 bis 12, **dadurch gekennzeichnet, dass** die Gasbarriere aus einer schwer oder nicht entzündbaren Mischung aus Brennstoffgemisch und Inertgas besteht, oder dass die Gasbarriere aus im Wesentlichen unvermischtem Inertgas besteht.

14. Verfahren nach einem der Ansprüche 7 bis 13, **dadurch gekennzeichnet, dass** der Verbrennungsmotor mit einem effektivem Mitteldruck ($p_{me}$) von wenigstens 12 bar, vorzugsweise von wenigstens 15 bar, betrieben wird.

**Claims**

1. Internal combustion engine for burning a fuel mixture containing hydrogen and air in an Otto cycle, wherein the internal combustion engine has at least one cylinder unit (1) and an intake duct (4) connected thereto, wherein the cylinder unit (1) has a combustion chamber (3), at least one intake valve (5) and at least one exhaust valve (7), and wherein the intake duct (4) has at least one gas mixing unit (8) for producing the fuel mixture, **characterized in that** an orifice (15) of an inert gas line (21) is arranged upstream of the combustion chamber (3) of the cylinder unit (1) in the intake duct (4), which has a mixture cooler (13) and a throttle valve (14) between the gas mixing unit (8) and the combustion chamber (3).

2. Internal combustion engine according to claim 1, **characterized in that** the orifice (15) is arranged in the region of the intake valve (5) and/or **in that** the orifice (15) is arranged immediately upstream of a valve seat ring (19) of the intake valve (5) and/or **in that** the orifice (15) has at least one continuous or interrupted annular gap or at least one, preferably more than one, access bore into the intake duct (4).

3. Internal combustion engine according to claim 1 or 2, **characterized in that** it has two or more than two cylinder units (1) connected to the intake duct (4), **in that** in the intake duct (4) upstream of the combustion chamber (3) of each of the cylinder units (1) there is arranged in each case an orifice (15) of a respective inert gas line (21), and **in that** two or more of the inert gas lines (21), in particular all the inert gas lines (21), are connected to a common supply line for inert gas.

4. Internal combustion engine according to one of claims 1 to 3, **characterized in that** air can be introduced as the inert gas.

5. Internal combustion engine according to one of claims 1 to 4, **characterized in that** a compressor (12), preferably a turbocompressor, is arranged in an air supply line (9) upstream of the gas mixing unit (8), **in that** a section of the intake duct (4) between the compressor (12) and the gas mixing unit (8) is connected, preferably via a control valve (17), to a discharge line (16) for branching off a partial quantity of the compressed air, and **in that** the inert gas line (21) is connected to the discharge line (16) .

6. Internal combustion engine according to one of claims 1 to 5, **characterized in that** it has an effective mean pressure ($p_{me}$) of at least 12 bar, preferably of at least 15 bar.

7. Method for burning a fuel mixture containing hydrogen and air in an Otto cycle in an internal combustion engine which has at least one cylinder unit (1) and an intake duct (4) connected thereto, wherein the cylinder unit (1) has a combustion chamber (3), at least one intake valve (5) and at least one exhaust valve (7), and wherein the intake duct (4) has at least one gas mixing unit (8) for producing the fuel mixture, **characterized in that** inert gas, preferably air, is introduced upstream of the combustion chamber (3) at least temporarily into the intake duct (4), which has a mixture cooler (13) and a throttle valve (14) between the gas mixing unit (8) and the combustion chamber (3), so that a gas barrier comprising non-flammable gas is formed in a section of the intake duct (4) adjoining the combustion chamber (3).

8. Method according to claim 7, **characterized in that** the air required for the fuel mixture is compressed upstream of the gas mixing unit (8) by means of a compressor (12), preferably by means of a turbocompressor, **in that** a partial quantity of the compressed air is discharged between the compressor (12) and the gas mixing unit (8), and **in that** the discharged partial quantity of air is introduced into the intake duct (4) as inert gas.

9. Method according to claim 7 or 8, **characterized in that** during a first period (V) of the Otto cycle both the exhaust valve (7) and the intake valve (5) are at least partially open, and **in that** the inert gas is introduced substantially during the entire period (V) so that the gas barrier is formed substantially during the entire period (V) .

10. Method according to claim 9, **characterized in that** the inert gas is introduced in the Otto cycle over a second period, which starts after closing of the intake valve (5) and ends after the end of the first period (V), or **in that** the inert gas is introduced in the Otto cycle over a third period, which starts during closing of the intake valve (5), in particular at the end of an intake stroke (III.) of the Otto cycle, and ends after the end of the first period (V) .

11. Method according to claim 7 or 8, **characterized in that** the inert gas is introduced during the entire Otto cycle.

12. Method according to one of claims 7 to 11, **characterized in that** at least one section of the intake duct (4) is purged with inert gas during or after the termination of the Otto cycle.

13. Method according to one of claims 7 to 12, **characterized in that** the gas barrier consists of a hardly flammable or non-flammable mixture of fuel mixture and inert gas, or **in that** the gas barrier consists of essentially unmixed inert gas.

14. Method according to one of claims 7 to 13, **characterized in that** the internal combustion engine is operated at an effective mean pressure ($p_{me}$) of at least 12 bar, preferably of at least 15 bar.

**Revendications**

1. Moteur à combustion interne pour la combustion d'un mélange combustible contenant de l'hydrogène et de l'air dans un cycle d'Otto, lequel moteur à combustion interne comporte au moins une unité de cylindre (1) et un conduit d'aspiration (4) relié à celle-ci, dans lequel l'unité de cylindre (1) comporte un espace de combustion (3), au moins une soupape d'admission (5) et au moins une soupape d'échappement (7), et dans lequel le conduit d'aspiration (4) présente au moins une unité de mélange des gaz (8) servant à produire le mélange combustible, **caractérisé en ce qu'**un débouché (15) d'une conduite de gaz inerte (21) est disposé en amont de la chambre de combustion (3) de l'unité de cylindre (1) dans le conduit d'aspiration (4), qui comporte un refroidisseur de mélange (13) et un papillon d'étranglement (14) entre l'unité de mélange des gaz (8) et la chambre de combustion (3).

2. Moteur à combustion interne selon la revendication 1, **caractérisé en ce que** le débouché (15) est disposé au niveau de la soupape d'admission (5) et/ou **en ce que** le débouché (15) est disposé immédiatement en amont du siège rapporté (19) de la soupape d'admission (5) et/ou **en ce que** le débouché (15) comporte au moins un espace annulaire continu ou discontinu ou au moins un, de préférence plus d'un, alésage d'accès au conduit d'aspiration (4).

3. Moteur à combustion interne selon la revendication 1 ou 2, **caractérisé en ce qu'**il comporte deux ou plus de deux unités de cylindre (1) reliées au conduit d'aspiration (4), **en ce que** respectivement un débouché (15) de respectivement une conduite de gaz inerte (21) est disposée dans le conduit d'aspiration (4) en amont de la chambre de combustion (3) de chacune des unités de cylindre (1) et **en ce que** deux ou plusieurs des conduites de gaz inerte (21) sont reliées à une conduite commune d'alimentation en gaz inerte.

4. Moteur à combustion interne selon l'une des revendications 1 à 3, **caractérisé en ce que** de l'air peut être introduit pour servir de gaz inerte.

5. Moteur à combustion interne selon l'une des revendications 1 à 4, **caractérisé en ce qu'**un compresseur (12), de préférence un turbocompresseur, est disposé dans une conduite d'arrivée d'air (9) en amont de l'unité de mélange des gaz (8), **en ce qu'**un tronçon du conduit d'aspiration (4) entre le compresseur (12) et l'unité de mélange des gaz (8) est relié à une conduite d'extraction (16), de préférence par l'intermédiaire d'une valve de régulation (17), pour dériver une quantité partielle de l'air comprimé, et **en ce que** la conduite de gaz inerte (21) est reliée à la conduite d'extraction (16).

6. Moteur à combustion interne selon l'une des revendications 1 à 5, **caractérisé en ce qu'**il présente une pression moyenne effective ($p_{me}$) d'au moins 12 bars, de préférence d'au moins 15 bars.

7. Procédé de combustion d'un mélange combustible contenant de l'hydrogène et de l'air dans un cycle d'Otto dans un moteur à combustion interne qui comporte au moins une unité de cylindre (1) et un conduit d'aspiration (4) relié à celle-ci, dans lequel l'unité de cylindre (1) comporte un espace de combustion (3), au moins une soupape d'admission (5) et au moins une soupape d'échappement (7), et dans lequel le conduit d'aspiration (4) présente au moins une unité de mélange des gaz (8) pour produire le mélange combustible, **caractérisé en ce qu'**un gaz inerte, de préférence de l'air, est introduit au moins temporairement en amont de la chambre de combustion (3) dans le conduit d'aspiration (4), qui présente entre l'unité de mélange des gaz (8) et la chambre de combustion (3) un refroidisseur de mélange (13) et un papillon d'étranglement (14), de façon à former une barrière de gaz composée de gaz ininflammable dans un tronçon du conduit d'aspiration (4) se raccordant à la chambre de combustion (3).

8. Procédé selon la revendication 7, **caractérisé en ce que** l'air nécessaire pour le mélange combustible est comprimé en amont de l'unité de mélange des gaz (8) avec un compresseur (12), de préférence un turbocompresseur, **en ce qu'**une quantité partielle de l'air comprimé est dérivée entre le compresseur (12) et l'unité de mélange des gaz (8) et **en ce que** la quantité partielle d'air dérivée est introduite dans le conduit d'aspiration (4) pour servir de gaz inerte.

9. Procédé selon la revendication 7 ou 8, **caractérisé en ce que** pendant un premier intervalle de temps (V) du cycle d'Otto, la soupape d'échappement (7) ainsi que la soupape d'admission (5) sont au moins partiellement ouvertes, et **en ce que** le gaz inerte est introduit pendant sensiblement tout l'intervalle de temps (V), de sorte que la barrière de gaz est formée pendant sensiblement tout l'intervalle de temps (V).

10. Procédé selon la revendication 9, **caractérisé en ce que** le gaz inerte est introduit dans le cycle d'Otto pendant un deuxième intervalle de temps qui commence après la fermeture de la soupape d'admission (5) et finit après la fin du premier intervalle de temps (V), ou **en ce que** le gaz inerte est introduit dans le cycle d'Ottopendant un troisième intervalle de temps qui commence pendant la fermeture de la soupape d'admission (5), en particulier à la fin d'un temps d'aspiration (III.) du cycle d'Otto, et finit après la fin du premier intervalle de temps (V).

11. Procédé selon la revendication 7 ou 8, **caractérisé en ce que** le gaz inerte est introduit pendant tout le cycle d'Otto.

12. Procédé selon l'une des revendications 7 à 11, **caractérisé en ce qu'**au moins un tronçon du conduit d'aspiration (4) est rincé avec du gaz inerte à la fin ou après la fin du cycle d'Otto.

13. Procédé selon l'une des revendications 7 à 12, **caractérisé en ce que** la barrière de gaz se compose d'un mélange difficilement inflammable ou ininflammable de mélange combustible et de gaz inerte ou **en ce que** la barrière de gaz se compose de gaz inerte sensiblement sans mélange.

14. Procédé selon l'une des revendications 7 à 13, **caractérisé en ce que** le moteur à combustion interne est conduit sous une pression moyenne effective ($p_{me}$) d'au moins 12 bars, de préférence d'au moins 15 bars.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010038003 A
- KR 102027498 B1
- JP 2016118109 A